(19) Europäisches Patentamt
European Patent Office
Office européen des brevets

(11) EP 4 424 744 A1

(12) **EUROPEAN PATENT APPLICATION**
published in accordance with Art. 153(4) EPC

(43) Date of publication:
**04.09.2024 Bulletin 2024/36**

(21) Application number: **22887063.0**

(22) Date of filing: **26.10.2022**

(51) International Patent Classification (IPC):
***C08G 64/06*** *(2006.01)* ***C08L 69/00*** *(2006.01)*

(52) Cooperative Patent Classification (CPC):
**C08G 64/06; C08L 69/00**

(86) International application number:
**PCT/JP2022/039925**

(87) International publication number:
**WO 2023/074738 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2021 JP 2021176673**

(71) Applicant: **Mitsubishi Chemical Corporation**
**Chiyoda-ku**
**Tokyo 100-8251 (JP)**

(72) Inventors:
- **KOMIYA, Yukinori**
**Tokyo 100-8251 (JP)**
- **YOKOGI, Masashi**
**Tokyo 100-8251 (JP)**

(74) Representative: **Hoffmann Eitle**
**Patent- und Rechtsanwälte PartmbB**
**Arabellastraße 30**
**81925 München (DE)**

(54) **POLYCARBONATE RESIN COMPOSITION**

(57) A polycarbonate resin composition including a carbonate structural unit (X) derived from an aromatic dihydroxy compound represented by the following formula (1), a carbonate structural unit (Y) derived from an aromatic dihydroxy compound represented by the following formula (2), and a carbonate structural unit (Z) derived from an aromatic dihydroxy compound represented by the following formula (3). A molar ratio of the content of the carbonate structural unit (Y) to the carbonate structural unit (X) is 0.65 or more, and the content of the carbonate structural units (Y) in 100 mol% of all carbonate structural units of the polycarbonate resin composition is 49 mol% or less.

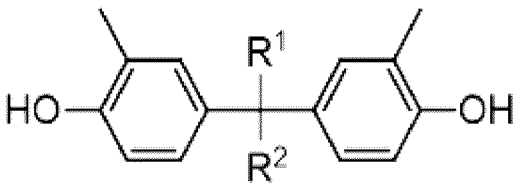
(1)

($R^1$ and $R^2$ represent a hydrogen atom, a substituted or unsubstituted alkyl group having 1 to 20 carbon atoms, or a substituted or unsubstituted aryl group. $R^1$ and $R^2$ may be bonded to each other to form a ring.)

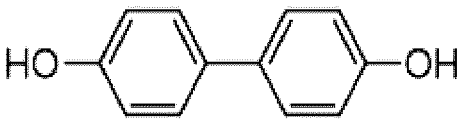
(2)

EP 4 424 744 A1

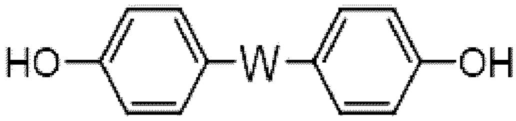

(3)

(W represents -O-, -S-, $-SO_2-$, or $-CR^3R^4-$. $R^3$ and $R^4$ represent a hydrogen atom, a substituted or unsubstituted alkyl group having 1 to 20 carbon atoms, or a substituted or unsubstituted aryl group. $R^3$ and $R^4$ may be bonded to each other to form a ring.)

## Description

### Technical Field

The present invention relates to a polycarbonate resin composition. Specifically, the present invention relates to a polycarbonate resin composition that has excellent surface hardness and impact resistance, as well as excellent heat resistance and transparency. The present invention also relates to an injection product and an extrusion molded product of this polycarbonate resin composition.

### Background Art

Polycarbonate resins have high mechanical strength, good electrical characteristics, and high transparency and are widely used as engineering plastics in various fields, such as electrical and electronic devices and automobiles. In recent years, in these application fields, thinner, smaller, and lighter formed products have been developed, and further performance improvement of forming materials has been required.
However, known polycarbonate resins prepared using bisphenol A as a raw material have insufficient surface hardness among these required characteristics. Therefore, it has become desirable to develop polycarbonate resins having high surface hardness, and several proposals have been made.
Patent Literature 1 describes a polycarbonate resin composition containing a ternary copolymerized polycarbonate resin of 2,2-bis(4-hydroxy-3-methylphenyl)propane, 4,4'-dihydroxy-diphenyl, and 2,2-bis(4-hydroxyphenyl)propane which has excellent scratch resistance and heat resistance.
Patent Literature 2 describes a polycarbonate resin composition having excellent scratch resistance, impact resistance and heat resistance which is prepared by blending a ternary copolymerized polycarbonate resin of 2,2-bis(4-hydroxy-3-methylphenyl)propane, 4,4'-dihydroxy-diphenyl, and 2,2-bis(4-hydroxyphenyl)propane; an aromatic polycarbonate; and an acrylic impact resistance modifier.

### Citation List

#### Patent Literature

PTL1: US Patent Publication 2014/0186602
PTL2: WO2014/104484

### Summary of Invention

#### Technical Problem

Patent Literature 1 discloses only examples in which the molar ratio of 4,4'-dihydroxy-diphenyl to 2,2-bis(4-hydroxy-3-methylphenyl)propane is low. In Patent Literature 1, it is not possible to achieve both surface hardness and impact resistance.
In Patent Literature 2, by blending an acrylic impact resistance modifier, both surface hardness and impact resistance are achieved. However, acrylic resins reduce transparency when blended with polycarbonate resins. Therefore, there is a need for a material that uses polycarbonate resin alone, without blending other types of resins, to achieve both surface hardness and impact resistance, as well as excellent heat resistance and transparency.
An object of the present invention is to provide a polycarbonate resin composition that has excellent surface hardness and impact resistance, as well as excellent heat resistance and transparency.

#### Solution to Problem

The present inventors have found that a polycarbonate resin composition containing a specific proportion of carbonate structural units derived from a specific aromatic dihydroxy compound can meet the above object without blending other types of resins, and have arrived at the present invention.
The gist of the present invention are in the following [1] to [14] .
[1] A polycarbonate resin composition comprising a carbonate structural unit (X) derived from an aromatic dihydroxy

compound represented by the following formula (1), a carbonate structural unit (Y) derived from an aromatic dihydroxy compound represented by the following formula (2), and a carbonate structural unit (Z) derived from an aromatic dihydroxy compound represented by the following formula (3),

wherein a molar ratio of the content of the carbonate structural unit (Y) to the carbonate structural unit (X) is 0.65 or more, and
the content of the carbonate structural unit (Y) in 100 mol% of all carbonate structural units of the polycarbonate resin composition is 49 mol% or less.

[Chem. 1]

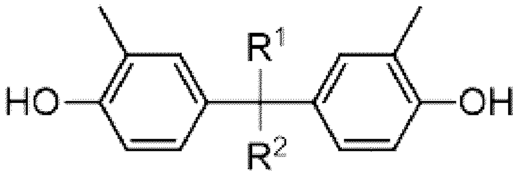

(1)

(In the formula (1), $R^1$ and $R^2$ each independently represent a hydrogen atom, a substituted or unsubstituted alkyl group having 1 to 20 carbon atoms, or a substituted or unsubstituted aryl group. $R^1$ and $R^2$ may be bonded to each other to form a ring.)

[Chem. 2]

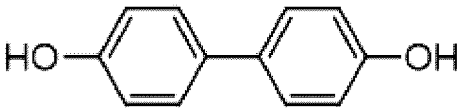

(2)

[Chem. 3]

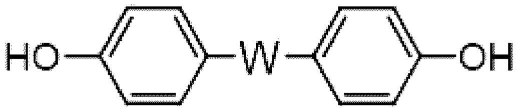

(3)

(In the formula (3), W represents -O-, -S-, $-SO_2-$, or $-CR^3R^4-$(Wherein $R^3$ and $R^4$ each independently represent a hydrogen atom, a substituted or unsubstituted alkyl group having 1 to 20 carbon atoms, or a substituted or unsubstituted aryl group. $R^3$ and $R^4$ may be bonded to each other to form a ring.)

[2] The polycarbonate resin composition according to [1], wherein the content of the carbonate structural unit (Z) in 100 mol% of all carbonate structural units is 5 mol% or more and 70 mol% or less.
[3] The polycarbonate resin composition according to [1] or [2], wherein the content of the carbonate structural unit (X) in 100 mol% of all carbonate structural units is 15 mol% or more and 60 mol% or less.
[4] The polycarbonate resin composition according to any one of [1] to [3], wherein the content of the carbonate structural unit (Y) in 100 mol% of all carbonate structural units is 15 mol% or more and 49 mol% or less.
[5] The polycarbonate resin composition according to any one of [1] to [4], comprising the carbonate structural unit (X), the carbonate structural unit (Y), and the carbonate structural unit (Z) as a copolymerized polycarbonate resin.
[6] The polycarbonate resin composition according to any one of [1] to [4], wherein the polycarbonate resin composition is a blend of a polycarbonate resin containing the carbonate structural unit (X), a polycarbonate resin containing the carbonate structural unit (Y), and a polycarbonate resin containing the carbonate structural unit (Z) .
[7] The polycarbonate resin composition according to any one of [1] to [6], wherein a viscosity-average molecular weight (Mv) is in the range of 13,000 to 33,000.
[8] The polycarbonate resin composition according to any one of [1] to [7], having a pencil hardness of HB or higher as measured by a method based on ISO 15184.
[9] The polycarbonate resin composition according to any one of [1] to [8], having a notched Izod value of 80 J/m

or more as measured by a method based on ASTM D256.

[10] The polycarbonate resin composition according to any one of [1] to [9], wherein the carbonate structural unit (X) is a carbonate structural unit derived from an aromatic dihydroxy compound represented by the following formula (4) and/or an aromatic dihydroxy compound represented by the following formula (5).

[Chem. 4]

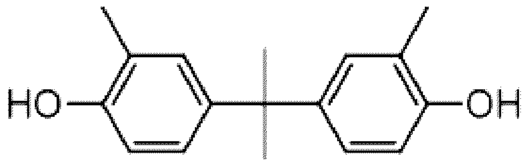

(4)

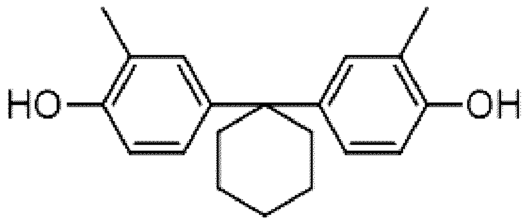

(5)

[11] The polycarbonate resin composition according to any one of [1] to [10], wherein the carbonate structural unit (Z) is a carbonate structural unit derived from any one or more of an aromatic dihydroxy compound represented by the following formula (6), an aromatic dihydroxy compound represented by the following formula (7), and an aromatic dihydroxy compound represented by the following formula (8).

[Chem. 5]

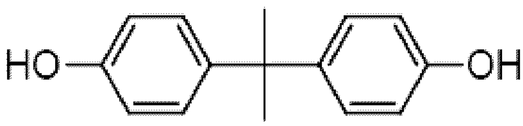

(6)

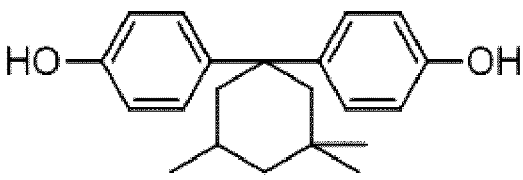

(7)

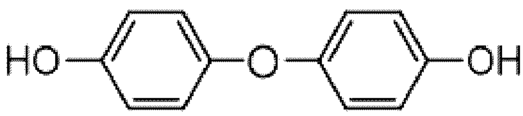

(8)

[12] An injection molded product obtained by injection molding the polycarbonate resin composition according to any one of [1] to [11].

[13] An extrusion molded product obtained by extrusion molding the polycarbonate resin composition according to any one of [1] to [11].

[14] The extrusion molded product according to [13], wherein the extrusion molded product is a sheet or a film.

Advantageous Effect of Invention

According to the present invention, it is possible to provide a polycarbonate resin composition that has excellent

surface hardness and impact resistance, as well as excellent heat resistance and transparency.

Since the polycarbonate resin composition of the present invention has good surface hardness, impact resistance, heat resistance, and transparency, it can be widely used as a material for manufacturing parts in automobiles, electrical and electronic materials, and other industrial fields..

Description of Embodiments

The present invention is described in detail in the following embodiments and examples. The present invention is not limited to these embodiments and examples.

In the present specification, unless otherwise specified, numerical values before and after "to" mean that these values are included as a lower limit and an upper limit.

[Polycarbonate resin composition]

The polycarbonate resin composition of the present invention has a carbonate structural unit (X) (hereinafter sometimes simply referred to as "carbonate structural unit (X)") derived from an aromatic dihydroxy compound represented by the following formula (1) (hereinafter sometimes referred to as "aromatic dihydroxy compound (1)"), a carbonate structural unit (Y) (hereinafter sometimes simply referred to as "carbonate structural unit (Y)") derived from an aromatic dihydroxy compound represented by the following formula (2) (hereinafter sometimes referred to as "aromatic dihydroxy compound (2)"), and a carbonate structural unit (Z) (hereinafter sometimes simply referred to as "carbonate structural unit (Z)") derived from an aromatic dihydroxy compound represented by the following formula (3) (hereinafter sometimes referred to as "carbonate structural unit (Y)"), in a molar ratio of the carbonate structural unit (Y)/the carbonate structural unit (X) (hereinafter sometimes simply referred to as "(Y)/(X)") of 0.65 or more and the content of the carbonate structural units (Y) in 100 mol% of all carbonate structural units (hereinafter, the content of carbonate structural units such as the carbonate structural unit (X), the carbonate structural unit (Y), the carbonate structural unit (Z), and the like are all expressed as a mole percentage based on 100 mol% of total carbonate structural units in the polycarbonate resin composition.) of 49 mol% or less.

[Chem. 6]

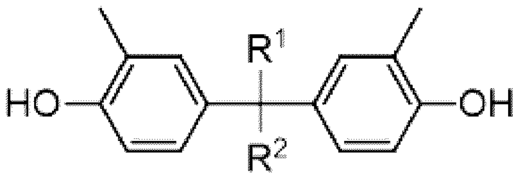

(1)

(In the formula (1), $R^1$ and $R^2$ each independently represent a hydrogen atom, a substituted or unsubstituted alkyl group having 1 to 20 carbon atoms, or a substituted or unsubstituted aryl group. $R^1$ and $R^2$ may be bonded to each other to form a ring.)

[Chem. 7]

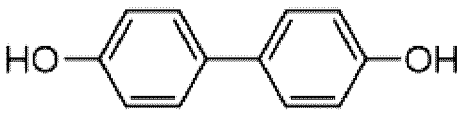

(2)

[Chem. 8]

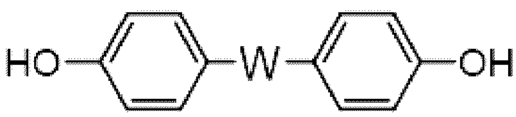

(3)

In the formula (3), W represents -O-, -S-, $-SO_2-$, or - $CR^3R^4$-. ($R^3$ and $R^4$ each independently represent a hydrogen atom, a substituted or unsubstituted alkyl group having 1 to 20 carbon atoms, or a substituted or unsubstituted aryl group. $R^3$ and $R^4$ may be bonded to each other to form a ring.)

The polycarbonate resin composition of the present invention can have good surface hardness, impact resistance, heat resistance, and transparency, by containing the carbonate structural unit (X), the carbonate structural unit (Y) and the carbonate structural unit (Z), and the carbonate structural unit (X) and the carbonate structural unit (Y) such that molar ratio of the carbonate structural unit (Y)/ the carbonate structural unit (X) of 0.65 or more, and the content of the carbonate structural unit (Y) of 49 mol% or less.

The polycarbonate resin composition of the present invention may be any composition as long as it contain the carbonate structural unit (X), the carbonate structural unit (Y), and the carbonate structural unit (Z), and the carbonate structural unit (X) and the carbonate structural unit (Y) in the above (Y)/(X) molar ratio, and there is no particular restriction on the content form of the carbonate structural unit (X), the carbonate structural unit (Y), and the carbonate structural unit (Z). Usually, the carbonate structural unit (X), the carbonate structural unit (Y), and the carbonate structural unit (Z) are contained in the polycarbonate resin. That is, the polycarbonate resin composition of the present invention may be a polycarbonate resin mixture of a polycarbonate resin containing the carbonate structural unit (X), a polycarbonate resin containing the carbonate structural unit (Y), and a polycarbonate resin containing the carbonate structural unit (Z). Alternatively, it may contain a ternary copolymerization type polycarbonate resin that simultaneously contains the carbonate structural unit (X), the carbonate structural unit (Y) and the carbonate structural unit (Z). Moreover, it may also be a mixture of a polycarbonate resin containing one or two of the carbonate structural unit (X), the carbonate structural unit (Y) and the carbonate structural unit (Z), with a copolymerized polycarbonate resin containing the carbonate structural units (X), the carbonate structural unit (Y) and the carbonate structural unit (Z). The polycarbonate resin composition of the present invention may further contain a polycarbonate resin that does not contain the carbonate structural units (X), the carbonate structural units (Y) and the carbonate structural units (Z).

When the polycarbonate resin composition of the present invention contains the carbonate structural units (X), the carbonate structural unit (Y) and the carbonate structural units (Z) as a tertiary copolymerized polycarbonate resin containing the carbonate structural unit (X), the carbonate structural unit (Y) and the carbonate structural unit (Z), the polycarbonate resin composition of the present invention is referred to as a "polycarbonate resin." On the other hand, when the polycarbonate resin composition of the present invention is a mixture of a polycarbonate resin containing the carbonate structural unit (X), the polycarbonate resin containing the carbonate structural unit (Y), and a polycarbonate resin containing the carbonate structural unit (Z), it is usually called a "polycarbonate resin composition." The same applies to the other forms of content mentioned above.

In the present invention, the term "polycarbonate resin composition" includes cases where the composition is composed of one type of copolymerized polycarbonate resin containing the carbonate structural unit (X), the carbonate structural unit (Y) and the carbonate structural unit (Z).

<Aromatic dihydroxy compound represented by the formula (1)>

In the polycarbonate resin composition of the present invention, in the formula (1), $R^1$ and $R^2$ each independently represent a hydrogen atom, a substituted or unsubstituted alkyl group having 1 to 20 carbon atoms, or a substituted or unsubstituted aryl group.

Specific examples of substituted or unsubstituted alkyl groups having 1 to 20 carbon atoms for $R^1$ and $R^2$ include:

methyl group, ethyl group, n-propyl group, n-butyl group, n-pentyl group, n-hexyl group, n-heptyl group, n-octyl group, n-nonyl group, n-decyl group, n-undecyl group , n-dodecyl group, n-tridecyl group, n-tetradecyl group, n-pentadecyl group, n-hexadecyl group, n-heptadecyl group, n-octadecyl group, n-nonadecyl group, n-icosyl group;
methylethyl group, methylpropyl group, methylbutyl group, methylpentyl group, methylhexyl group, methylheptyl group, methyloctyl group, methylnonyl group, methyldecyl group, methylundecyl group, methyldodecyl group, methyltridecyl group, methyltetra Decyl group, methylpentadecyl group, methylhexadecyl group, methylheptadecyl group, methyloctadecyl group, methylnonadecyl group;
dimethylethyl group, dimethylpropyl group, dimethylbutyl group, dimethylpentyl group, dimethylhexyl group, dimethylheptyl group, dimethyloctyl group, dimethylnonyl group, dimethyldecyl group, dimethylundecyl group, dimethyldodecyl group, dimethyltridecyl group , dimethyltetradecyl group, dimethylpentadecyl group, dimethylhexadecyl group, dimethylheptadecyl group, dimethyloctadecyl group;
trimethylbutyl group, trimethylpentyl group, trimethylhexyl group, trimethylheptyl group, trimethyloctyl group, trimethylnonyl group, trimethyldecyl group, trimethylundecyl group, trimethyldodecyl group, trimethyltridecyl group, trimethyltetradecyl group, trimethylpentadecyl group, trimethylhexadecyl group, trimethylheptadecyl group;
ethylpentyl group, ethylhexyl group, ethylheptyl group, ethyloctyl group, ethylnonyl group, ethyldecyl group, ethylundecyl group, ethyldodecyl group, ethyltridecyl group, ethyltetradecyl group, ethylpentadecyl group, ethylhexadecyl

group , ethylheptadecyl group, ethyloctadecyl group;
propylhexyl group, propylheptyl group, propyloctyl group, propylnonyl group, propyldecyl group, propylundecyl group, propyldodecyl group, propyltridecyl group, propyltetradecyl group, propylpentadecyl group, propylhexadecyl group, propylheptadecyl group;
butylhexyl group, butylheptyl group, butyloctyl group, butylnonyl group, butyldecyl group, butylundecyl group, butyldodecyl group, butyltridecyl group, butyltetradecyl group, butylpentadecyl group, butylhexadecyl group, and the like.

Specific examples of substituted or unsubstituted aryl groups for $R^1$ and $R^2$ include phenyl group, tolyl group, 4-methylphenyl group, naphthyl group, and the like.

Furthermore, $R^1$ and $R^2$ in the formula (1) may be bonded to each other to form a ring. Specific examples of aromatic dihydroxy compounds in which $R^1$ and $R^2$ are bonded to each other to form a ring include those represented by the following formulas (5), (9), and (10).

[Chem. 9]

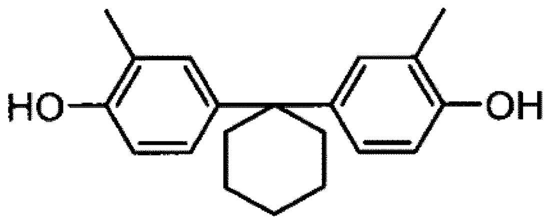

(5)

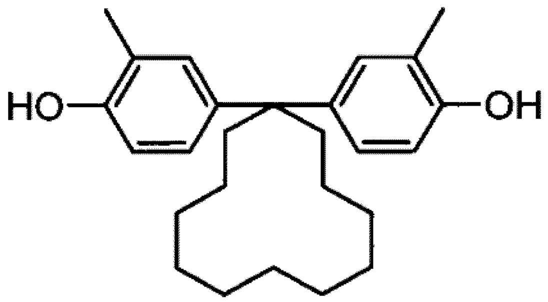

(9)

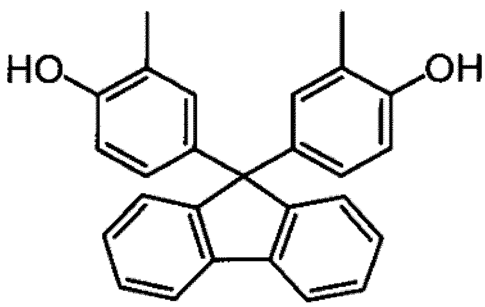

(10)

Among these, $R^1$ and $R^2$ are preferably a hydrogen atom, a methyl group, an ethyl group, or a cyclohexylidene group formed by bonding $R^1$ and $R^2$ to each other.

As the aromatic dihydroxy compound (1) according to the present invention, aromatic dihydroxy compounds represented by the following formulas (4) and (5) are more preferable from the viewpoint of mechanical properties and moldability.

[Chem. 10]

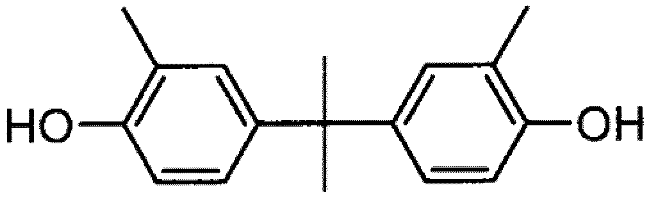

(4)

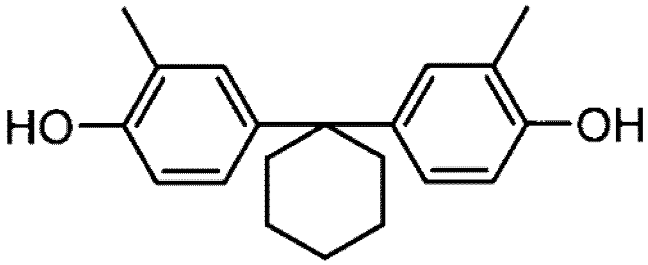

(5)

<Aromatic dihydroxy compound represented by the formula (3)>

In the polycarbonate resin composition of the present invention, in the formula (3), W represents -0-, -S-, $-SO_2-$, on $-CR^3R^4-$. ($R^3$ and $R^4$ each independently represent a hydrogen atom, a substituted or an unsubstituted alkyl group having 1 to 20 carbon atoms, or a substituted or unsubstituted aryl group. $R^3$ and $R^4$ may be bonded to each other to form a ring.)

Specific examples of substituted or unsubstituted alkyl groups having 1 to 20 carbon atoms for $R^3$ and $R^4$ include:

methyl group, ethyl group, n-propyl group, n-butyl group, n-pentyl group, n-hexyl group, n-heptyl group, n-octyl group, n-nonyl group, n-decyl group, n-undecyl group , n-dodecyl group, n-tridecyl group, n-tetradecyl group, n-pentadecyl group, n-hexadecyl group, n-heptadecyl group, n-octadecyl group, n-nonadecyl group, n-icosyl group;
methylethyl group, methylpropyl group, methylbutyl group, methylpentyl group, methylhexyl group, methylheptyl group, methyloctyl group, methylnonyl group, methyldecyl group, methylundecyl group, methyldodecyl group, methyltridecyl group, methyltetra Decyl group, methylpentadecyl group, methylhexadecyl group, methylheptadecyl group, methyloctadecyl group, methylnonadecyl group;
dimethylethyl group, dimethylpropyl group, dimethylbutyl group, dimethylpentyl group, dimethylhexyl group, dimethylheptyl group, dimethyloctyl group, dimethylnonyl group, dimethyldecyl group, dimethylundecyl group, dimethyldodecyl group, dimethyltridecyl group , dimethyltetradecyl group, dimethylpentadecyl group, dimethylhexadecyl group, dimethylheptadecyl group, dimethyloctadecyl group;
trimethylbutyl group, trimethylpentyl group, trimethylhexyl group, trimethylheptyl group, trimethyloctyl group, trimethylnonyl group, trimethyldecyl group, trimethylundecyl group, trimethyldodecyl group, trimethyltridecyl group, trimethyltetradecyl group, trimethylpenta decyl group, trimethylhexadecyl group, trimethylheptadecyl group;
ethylpentyl group, ethylhexyl group, ethylheptyl group, ethyloctyl group, ethylnonyl group, ethyldecyl group, ethylundecyl group, ethyldodecyl group, ethyltridecyl group, ethyltetradecyl group, ethylpentadecyl group, ethylhexadecyl group , ethylheptadecyl group, ethyloctadecyl group;
propylhexyl group, propylheptyl group, propyloctyl group, propylnonyl group, propyldecyl group, propylundecyl group, propyldodecyl group, propyltridecyl group, propyltetradecyl group, propylpentadecyl group, propylhexadecyl group, propylheptadecyl group;
butylhexyl group, butylheptyl group, butyloctyl group, butylnonyl group, butyldecyl group, butylundecyl group, butyldodecyl group, butyltridecyl group, butyltetradecyl group, butylpentadecyl group, butylhexadecyl group, and the like.

Specific examples of substituted or unsubstituted aryl groups for $R^3$ and $R^4$ include phenyl group, tolyl group, 4-methylphenyl group, naphthyl group, and the like.

$R^3$ and $R^4$ in the formula (3) may be bonded to each other to form a ring. Specific examples of aromatic dihydroxy compounds in which $R^3$ and $R^4$ are bonded to each other to form a ring include those represented by the following formulas (7), (11), (12), and (13).

[Chem. 11]

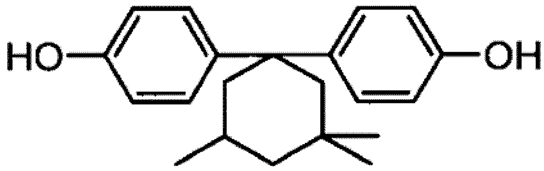

(7)

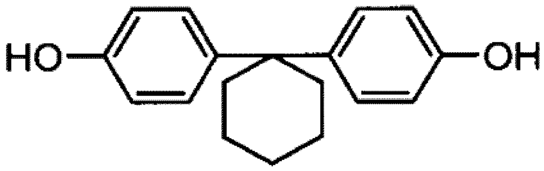

(11)

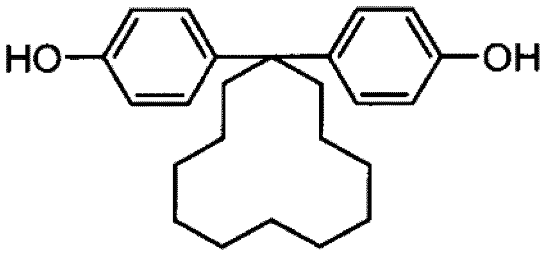

(12)

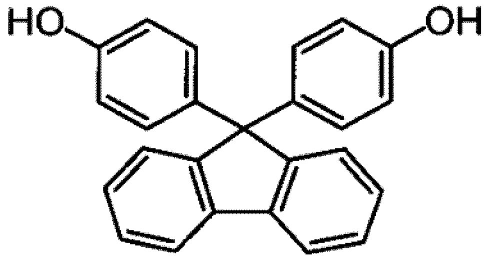

(13)

As the aromatic dihydroxy compound (3) according to the present invention, aromatic dihydroxy compounds represented by the following formulas (6) to (8) are preferable from the viewpoint of heat resistance, mechanical properties, and moldability.

[Chem. 12]

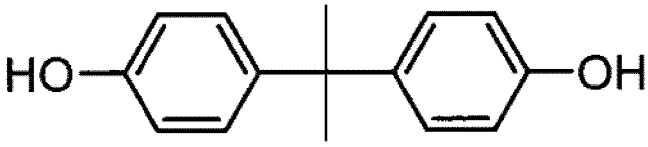

(6)

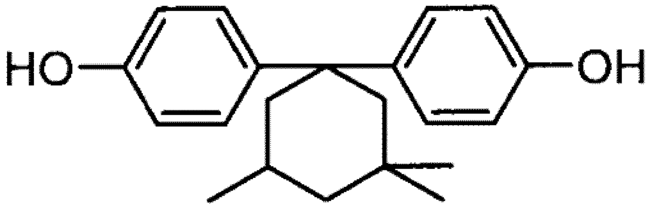

(7)

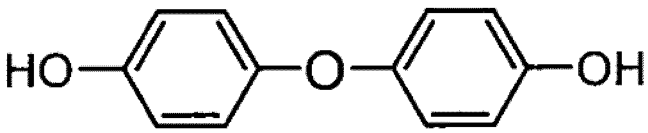

(8)

<Carbonate structural units (X), (Y), (Z)>

The polycarbonate resin composition of the present invention contains the carbonate structural unit (X) and the carbonate structural unit (Y) in a molar ratio of (Y)/(X) = 0.65 or more, and the carbonate structural unit (Y) of 49 mol% or less. The higher the molar ratio of (Y)/(X), the greater the impact resistance, and it is possible to achieve both surface hardness and impact resistance. Therefore, this ratio is preferably (Y)/(X)=0.70 or more, more preferably 0.75 or more, and particularly preferably 0.85 or more.

In the polycarbonate resin composition of the present invention, the higher the molar ratio of (Y)/(X) in the carbonate structural unit (X) and the carbonate structural unit (Y), the greater the impact resistance, and it is possible to achieve both surface hardness and impact resistance. However, When the content of the carbonate structural unit (Y) is increased too much in order to increase the molar ratio of (Y)/(X), crystallization may occur. Therefore, in addition to the carbonate structural unit (X) and the carbonate structural unit (Y), the carbonate structural unit (Z) is further included. By including the carbonate structural unit (Z), the ratio of the carbonate structural unit (Y) to all carbonate structural units in the polycarbonate resin composition can be lowered, and at a ratio where the carbonate structural unit (Y) does not crystallize, it becomes possible to greatly increase the (Y)/(X) molar ratio. Since the (Y)/(X) molar ratio can be greatly increased, impact resistance is greatly improved, and a polycarbonate resin composition having good surface hardness and high impact resistance can be obtained. Furthermore, by including the carbonate structural unit (Z), it becomes possible to impart good heat resistance and moldability.

The content of the carbonate structural unit (Z) in the polycarbonate resin composition of the present invention is preferably 5 mol% or more and 70 mol% or less. From the viewpoint of impact resistance, the lower limit of the content of the carbonate structural unit (Z) is more preferably 8 mol% or more, still more preferably 13 mol% or more, and particularly preferably 18 mol% or more. From the viewpoint of surface hardness, the upper limit of the content of the carbonate structural unit (Z) is more preferably 57 mol% or less, still more preferably 50 mol% or less, and particularly preferably 43 mol% or less.

The content of the carbonate structural unit (X) in the polycarbonate resin composition of the present invention is preferably 15 mol% or more and 60 mol% or less. From the viewpoint of surface hardness, the lower limit of the content of the carbonate structural unit (X) is more preferably 22 mol% or more, and particularly preferably 26 mol% or more. From the viewpoint of impact resistance, the upper limit of the content of the carbonate structural unit (X) is more preferably 52 mol% or less, and particularly preferably 45 mol% or less.

The content of the carbonate structural unit (Y) of the polycarbonate resin composition of the present invention is preferably 15 mol% or more and 49 mol% or less. From the viewpoint of surface hardness and impact resistance, the lower limit of the content of the carbonate structural unit (Y) is more preferably 20 mol% or more, still more preferably

24 mol% or more, and particularly preferably 31 mol% or more. The upper limit of the content of the carbonate structural unit (Y) is preferably 47 mol% or less, and more preferably 43 mol% or less, from the viewpoint of crystallinity.

The polycarbonate resin composition of the present invention may contain only one type of carbonate structural unit (X), or may contain two or more types. That is, it may contain the carbonate structural units (X) derived from two or more types of aromatic dihydroxy compounds (1). The carbonate structural unit (Y) may also contain only one type, or may contain two or more types. That is, it may contain carbonate structural units (Y) derived from two or more types of aromatic dihydroxy compounds (2). Similarly, the carbonate structural unit (Z) may contain only one type, or may contain two or more types. That is, it may contain carbonate structural units (Z) derived from two or more types of aromatic dihydroxy compounds (3).

The polycarbonate resin composition of the present invention may contain the carbonate structural unit (X), the carbonate structural unit (Y), and the carbonate structural unit (Z), and may contain the carbonate structural unit (X) and the carbonate structural unit (Y) in the above (Y)/(X) molar ratio. Each of the carbonate structural units (X), (Y), and (Z) can be contained in any content within a range that does not impair the characteristics of the polycarbonate resin composition of the present invention. However, in order to reliably obtain the effects of the present invention by including the carbonate structural unit (X), the carbonate structural unit (Y), and the carbonate structural unit (Z), it is preferable that the polycarbonate resin composition of the present invention contains the carbonate structural units (X), the carbonate structural unit (Y) and the carbonate structural units (Z) in a total amount of 20 mol% or more, more preferably 40 mol% or more, and particularly preferably 60 to 100 mol% based on all carbonate structural units.

<Other carbonate structural units>

The polycarbonate resin composition of the present invention may contain carbonate structural units other than carbonate structural units (X), (Y), and (Z) within a range that does not impair the object of the present invention. That is, the polycarbonate resin composition of the present invention may contain a carbonate structural unit derived from an aromatic or aliphatic dihydroxy compound other than the aromatic dihydroxy compounds (1), (2), and (3).

Dihydroxy compounds other than the aromatic dihydroxy compounds (1), (2), and (3) may be used alone or in combination of two or more in any combination and ratio.

<Content of each carbonate structural unit (X), (Y), (Z)>

The content of each carbonate structural unit (X), (Y), and (Z) in the polycarbonate resin composition of the present invention can be determined as the ratio of each aromatic dihydroxy compounds (1), (2), and (3) in all dihydroxy compounds used in the production of the polycarbonate resin composition of the present invention.

<Molecular weight of polycarbonate resin composition>

The molecular weight of the polycarbonate resin composition of the present invention is preferably 13,000 to 33,000 in terms of a viscosity-average molecular weight (Mv) calculated from the solution viscosity. It is preferable that the viscosity-average molecular weight (Mv) is equal to or higher than the above lower limit because the mechanical properties of the polycarbonate resin composition of the present invention will be good. It is preferable that the viscosity-average molecular weight is equal to or lower than the above upper limit because the fluidity of the polycarbonate resin composition of the present invention tends to be good. From such a viewpoint, the viscosity-average molecular weight (Mv) of the polycarbonate resin composition of the present invention is more preferably 14,000 or more. Further, it is more preferably 31,500 or less, and still more preferably 30,000 or less.

The viscosity-average molecular weight (Mv) of the polycarbonate resin composition of the present invention refers to a value determined by measuring intrinsic viscosity (limiting viscosity) [η] (unit: dL/g) at a temperature of 20°C with an Ubbelohde viscometer using methylene chloride as a solvent and calculated using Schnell viscosity equation $\eta = 1.23 \times 10^{-4} Mv^{0.83}$. The intrinsic viscosity (limiting viscosity) [η] refers to a value determined by measuring specific viscosities [ηsp] at different solution concentrations [C] (g/dL) and calculated using the following formula.

[Math. 1]

$$\eta = \lim_{c \to 0} \eta_{sp}/c$$

<Pencil hardness of polycarbonate resin composition>

The hardness of the polycarbonate resin composition of the present invention is not particularly limited. The polycarbonate resin composition of the invention has high hardness properties such that the pencil hardness measured by a method accordance with ISO 15184 is preferably HB or higher, and this value is more preferably F or higher.

The pencil hardness of the polycarbonate resin composition is measured using a pencil hardness tester at a load of 750 g on a test piece of the polycarbonate resin composition having a thickness of 3.2 mm, a length of 53.5 mm, and a width of 12.7 mm. The test piece can be obtained by injection molding using an injection molding machine.

<Izod impact test of polycarbonate resin composition>

Although there are no particular limitations, the polycarbonate resin composition of the present invention usually has such high impact resistance that the notched Izod value measured by a method accordance with ASTM D256 is preferably 80 J/m or more. This value is more preferably 90 J/m or more.

The Izod impact test of the polycarbonate resin composition is measured using the method described in the Examples section below on a test piece of the polycarbonate resin composition having a thickness of 3.2 mm, a length of 53.5 mm, and a width of 12.7 mm.

<Other ingredients>

The polycarbonate resin composition of the present invention may contain other components in addition to the polycarbonate resin containing the carbonate structural unit (X) and/or the carbonate structural unit (Y) and/or the carbonate structural unit (Z) as long as desired physical properties are not significantly impaired. Examples of other components include polycarbonate resins that do not contain carbonate structural units (X), carbonate structural units (Y), and carbonate structural units (Z), resins other than polycarbonate resins, and various resin additive agents.

Examples of resin additive agents include a heat stabilizer, an antioxidant, a release agent, a light stabilizer (HALS), a flame retardant, an antistatic agent, an anti-fogging agent, a lubricant, an anti-blocking agent, a flow modifier, a plasticizer, a dispersant, an antimicrobial agent, a dye, a pigment, or the like.

The resin additive agents may be used alone or combined in any ratio.

Examples of the other resins include, for example, thermoplastic polyester resins such as polyethylene terephthalate resin, polytrimethylene terephthalate resin, and polybutylene terephthalate resin, and the like; styrenic resins such as polystyrene resin, high impact polystyrene resin (HIPS), acrylonitrile-styrene copolymer (AS resin), acrylonitrile-styrene-acrylic rubber copolymer (ASA resin), acrylonitrile-ethylenepropylene rubber-styrene copolymer (AES resin), and the like; polyolefin resins such as polyethylene resin, polypropylene resin, and the like; polyamide resin; polyimide resin; polyetherimide resin; polyurethane resin; polyphenylene ether resin; polyphenylene sulfide resin; polysulfone resin; polymethacrylate resin, and the like.

One type of the other resin may be contained, or two or more types may be contained in any combination and ratio.

[Method for producing polycarbonate resin]

The polycarbonate resin constituting the polycarbonate resin composition of the present invention can be produced by a conventionally known polymerization method, and the polymerization method is not particularly limited. Examples of the polymerization method include an interfacial polymerization method, a melt transesterification method, a pyridine method, a ringopening polymerization method of a cyclic carbonate compound, and a solid-phase transesterification method of a prepolymer. Particularly suitable methods among these methods are more specifically described below.

<Interfacial polymerization method>

In the interfacial polymerization method, a raw material dihydroxy compound and a carbonate-forming compound are allowed to react in the presence of an inert organic solvent and an alkaline aqueous solution typically at a pH of 9 or more, and subsequent interfacial polymerization in the presence of a polymerization catalyst yields a polycarbonate resin. When necessary, the reaction system may include a molecular weight modifier (terminating agent) and an antioxidant for preventing the oxidation of the raw material dihydroxy compound.

Examples of the inert organic solvent include, but are not limited to, chlorinated hydrocarbons, such as dichloromethane, 1,2-dichloroethane, chloroform, monochlorobenzene, and dichlorobenzene; and aromatic hydrocarbons, such as benzene, toluene, and xylene.

The organic solvents may be used alone or combined in any ratio.

The alkaline aqueous solution may contain any alkaline compound, for example, an alkali or alkaline-earth metal compound, such as sodium hydroxide, potassium hydroxide, lithium hydroxide, or sodium hydrogen carbonate. Among these, sodium hydroxide and potassium hydroxide are preferred.

The alkaline compounds may be used alone or combined in any ratio.

The concentration of an alkaline compound in the alkaline aqueous solution is typically, but not limited to, in the range of 5% to 10% by mass to control the pH of the alkaline aqueous solution in the range of 10 to 12.

In the case of blowing with phosgene, to control the pH of an aqueous phase in the range of 10 to 12, preferably 10 to 11, it is preferable that the mole ratio of the raw material dihydroxy compound to the alkaline compound is typically 1:1.9 or more, particularly 1:2.0 or more, and typically 1:3.2 or less, particularly 1:2.5 or less.

By using a raw material dihydroxy compound containing the aromatic dihydroxy compound (1), the aromatic dihydroxy compound (2), and the aromatic dihydroxy compound (3), a copolymerized polycarbonate resin containing the carbonate structural unit (X), the carbonate structural unit (Y) and the carbonate structural unit (Z) can be produced. By using one of these aromatic dihydroxy compounds, a polycarbonate resin containing the carbonate structural unit (X), the carbonate structural unit (Y), or the carbonate structural unit (Z) can be produced.

The carbonate-forming compound is suitably a carbonyl halide. Phosgene is particularly preferred. The method using phosgene is particularly referred to as a phosgene method.

Examples of the polymerization catalyst include, but are not limited to, aliphatic tertiary amines, such as trimethylamine, triethylamine, tributylamine, tripropylamine, and trihexylamine; alicyclic tertiary amines, such as N,N'-dimethylcyclohexylamine and N,N'-diethylcyclohexylamine; aromatic tertiary amines, such as N,N'-dimethylaniline and N,N'-diethylaniline; quaternary ammonium salts, such as trimethylbenzylammonium chloride, tetramethylammonium chloride, and triethylbenzylammonium chloride; pyridines; guanines; and guanidine salts.

The polymerization catalysts may be used alone or combined in any ratio.

Examples of the molecular weight modifier include, but are not limited to, aromatic phenols with a monohydric phenolic hydroxy group; aliphatic alcohols, such as methanol and butanol; mercaptans; and phthalimides. Among these, aromatic phenols are preferred. Specific examples of the aromatic phenol include phenol, o-n-butylphenol, m-n-butylphenol, p-n-butylphenol, o-isobutylphenol, m-isobutylphenol, p-isobutylphenol, o-t-butylphenol, m-t-butylphenol, p-t-butylphenol, o-n-pentylphenol, m-n-pentylphenol, p-n-pentylphenol, o-n-hexylphenol, m-n-hexylphenol, p-n-hexylphenol, p-t-octylphenol, o-cyclohexylphenol, m-cyclohexylphenol, p-cyclohexylphenol, o-phenylphenol, m-phenylphenol, p-phenylphenol, o-n-nonylphenol, m-n-nonylphenol, p-n-nonylphenol, o-cumylphenol, m-cumylphenol, p-cumylphenol, o-naphthylphenol, m-naphthylphenol, p-naphthylphenol, 2,5-dit-butylphenol, 2,4-di-t-butylphenol, 3,5-di-t-butylphenol, 2,5-dicumylphenol, 3,5-dicumylphenol, p-cresol, bromophenol, tribromophenol, monoalkylphenols with a linear or branched alkyl group having 12 to 35 carbon atoms on average in the ortho, meta, or para position, 9-(4-hydroxyphenyl)-9-(4-methoxyphenyl)fluorene, 9-(4-hydroxy-3-methylphenyl)-9-(4-methoxy-3-methylphenyl)fluorene, and 4-(1-adamantyl)phenol. Among these, p-t-butylphenol, p-phenylphenol, and p-cumylphenol are preferably used.

The molecular weight modifiers may be used alone or combined in any ratio.

The amount of molecular weight modifier to be used is typically, but not limited to, 0.5 mol or more, preferably 1 mol or more, and typically 50 mol or less, preferably 30 mol or less, per 100 mol of the raw material dihydroxy compound.

The antioxidant may be, but is not limited to, a hindered phenolic antioxidant. Specific examples include pentaerythritoltetrakis[3-(3,5-di-tert-butyl-4-hydroxyphenyl)propionate], octadecyl-3-(3,5-di-tert-butyl-4-hydroxyphenyl)propionate, thiodiethylenebis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazine-2-ylamino)phenol, and 2-[1-(2-hydroxy-3,5-di-tert-pentylphenyl)ethyl]-4,6-di-tert-pentylphenyl acrylate.

Among these, pentaerythritoltetrakis[3-(3,5-di-tert-butyl-4-hydroxyphenyl)propionate] and octadecyl-3-(3,5-di-tert-butyl-4-hydroxyphenyl)propionate are preferred. Commercial products of such phenolic antioxidants include "Irganox 1010" and "Irganox 1076" manufactured by BASF and "ADK STAB AO-50" and "ADK STAB AO-60" manufactured by Adeka Corp.

The antioxidants may be used alone or combined in any ratio.

The amount of antioxidant to be used is not particularly limited, but for example, it is usually 0.001 parts by mass or more, and preferably 0.01 parts by mass or more, and more preferably 0.1 parts by mass or more, per 100 parts by mass of the raw material dihydroxy compound. The amount is usually 1 part by mass or less, and preferably 0.5 part by mass or less. When the amount of antioxidant to be used is less than the lower limit of the above range, the effect as an antioxidant may be insufficient, and when the amount of antioxidant to be used exceeds the upper limit of the above range, gas may easily be generated during injection molding.

In the reaction, a reaction substrate (reaction raw material), a reaction solvent (organic solvent), a catalyst, and

an additive agent are mixed in any order, provided that a desired polycarbonate resin can be produced. Thus, the order may be appropriately determined. For example, when phosgene is used as a carbonate-forming compound, the molecular weight modifier may be added at any point between the reaction (phosgenation) of the raw material dihydroxy compound with phosgene and the beginning of the polymerization reaction.

The reaction temperature is usually, but not limited to, in the range of 0°C to 40°C. The reaction time is usually, but not limited to, in the range of several minutes (for Example 10 minutes) to several hours (for example, 6 hours).

<Melt transesterification method>

The melt transesterification method involves transesterification between a carbonate ester and the raw material dihydroxy compound, for example.

The raw material dihydroxy compound is the same as that in the interfacial polymerization method.

Examples of the carbonate ester include compounds represented by the following general formula (14), such as aryl carbonates, dialkyl carbonates, biscarbonates of dihydroxy compounds, monocarbonates of dihydroxy compounds, and carbonates of dihydroxy compounds, such as cyclic carbonates.

[Chem. 13]

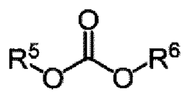

(14)

In the above general formula (14), $R^5$ and $R^6$ independently denote an alkyl group having 1 to 30 carbon atoms, an aryl group, or an arylalkyl group. When $R^5$ and $R^6$ independently denote an alkyl group or an arylalkyl group, the compound is hereinafter sometimes referred to as a dialkyl carbonate, and when $R^5$ and $R^6$ independently denote an aryl group, the compound is hereinafter sometimes referred to as a diaryl carbonate. In terms of reactivity with the dihydroxy compound, both $R^5$ and $R^6$ preferably independently denote an aryl group, more preferably a diaryl carbonate represented by the following general formula (15).

[Chem. 14]

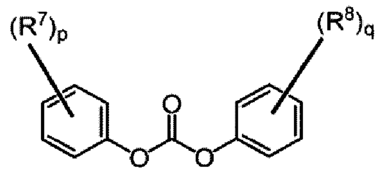

(15)

In the above general formula (15), $R^7$ and $R^8$ independently denote a halogen atom, a nitro group, a cyano group, an alkyl group having 1 to 20 carbon atoms, an alkoxycarbonyl group having 1 to 20 carbon atoms, a cycloalkyl group having 4 to 20 carbon atoms, or an aryl group having 6 to 20 carbon atoms, p and q independently denote an integer in the range of 0 to 5.

Specific examples of the carbonate ester include dialkyl carbonates, such as dimethyl carbonate, diethyl carbonate, and di-t-butyl carbonate, and (optionally substituted) diaryl carbonate, such as diphenyl carbonate (hereinafter sometimes abbreviated to "DPC"), bis(4-methylphenyl)carbonate, bis(4-chlorophenyl)carbonate, bis(4-fluorophenyl)carbonate, bis(2-chlorophenyl)carbonate, bis(2,4-difluorophenyl)carbonate, bis(4-nitrophenyl)carbonate, bis(2-nitrophenyl)carbonate, bis(methylsalicylphenyl)carbonate, and ditolyl carbonate. Among these, diphenyl carbonate is preferred.

These carbonate esters may be used alone or in combination.

Preferably 50% or less by mole, more preferably 30% or less by mole, of the carbonate ester may be substituted with dicarboxylic acid or dicarboxylate. Typical examples of the dicarboxylic acid or dicarboxylate include terephthalic acid, isophthalic acid, diphenyl terephthalate, and diphenyl isophthalate. Substitution with such a dicarboxylic acid or dicarboxylate yields a polyester carbonate.

The ratio of the raw material dihydroxy compound to the carbonate ester may be any ratio that can result in a desired polycarbonate resin. The carbonate ester is preferably used in excess with respect to the raw material dihydroxy compound in polymerization with the dihydroxy compound. That is, the carbonate ester is preferably used in an amount of 1.01 to 1.30 times (molar ratio), more preferably 1.02 to 1.20 times (molar ratio), relative to the dihydroxy compound. When this molar ratio is too small, the resulting polycarbonate resin will have a large number of terminal OH groups,

and the thermal stability of the resin will tend to deteriorate. When this molar ratio is too large, the reaction rate of transesterification will decrease, making it difficult to produce the polycarbonate resin having the desired molecular weight, or increasing the amount of carbonate ester remaining in the resin, which may cause odor during molding or in molded product.

A transesterification catalyst is typically used to produce a polycarbonate resin by the melt transesterification method. The transesterification catalyst is not limited, and may be a known transesterification catalyst. For example, an alkali metal compound and/or an alkaline-earth metal compound is preferably used. In an auxiliary manner, a basic compound such as a basic boron compound, a basic phosphorus compound, a basic ammonium compound, an amine compound or the like may be used together.

The transesterification catalysts may be used alone or combined in any ratio.

In the melt transesterification method, the reaction temperature is typically, but not limited to, in the range of 100°C to 320°C. The reaction pressure is typically, but not limited to, a reduced pressure of 2 mmHg or less. In specific procedures, a melt polycondensation reaction may be performed under the conditions described above while removing by-products.

The polycarbonate resin composition of the present invention is significantly affected by thermal history and oxidation in the presence of an alkaline catalyst whereby having poor hue. It is therefore preferred to set the reaction temperature at 320°C or less and select a reducedpressure condition with a lower limit of approximately 0.05 mmHg to prevent oxygen from leaking into an apparatus due to an excessively reduced pressure.

The reaction may be performed batch-wise or continuously. In a batch-wise reaction, a reaction substrate, a reaction solvent, a catalyst, and an additive agent are mixed in any order provided that a desired polycarbonate resin can be produced. Thus, the order may be appropriately determined.

When necessary, the melt transesterification method may use a catalyst deactivator. The catalyst deactivator may be any compound that can neutralize the transesterification catalyst. Examples of the catalyst deactivator include sulfur-containing acidic compounds and derivatives thereof and phosphorus-containing acidic compounds and derivatives thereof.

The catalyst deactivators may be used alone or in combination in any ratio.

The amount of catalyst deactivator to be used is typically, but not limited to, 0.5 equivalent or more, preferably 1 equivalent or more, more preferably 3 equivalent or more, and typically 50 equivalent or less, preferably 10 equivalent or less, more preferably 8 equivalent or less, of the transesterification catalyst. The amount of catalyst deactivator to be used is typically 1 ppm or more and 100 ppm or less, preferably 50 ppm or less, of the polycarbonate resin.

[Method for producing polycarbonate resin composition]

There is no particular limitation on the method of producing the polycarbonate resin composition of the present invention, which is a polycarbonate resin mixture of the polycarbonate resin containing the carbonate structural unit (X) (hereinafter sometimes referred to as "polycarbonate resin (a)"), the polycarbonate resin containing the carbonate structural unit (Y) (hereinafter sometimes referred to as "polycarbonate resin (b)")) and the polycarbonate resin containing the carbonate structural unit (Z) (hereinafter sometimes referred to as "polycarbonate resin (c)"). Examples thereof include methods 1) to 4) below:

1) A method of melt-kneading the polycarbonate resin (a), the polycarbonate resin (b), and the polycarbonate resin (c) ;
2) A method of melt-kneading the molten polycarbonate resin (a), the molten polycarbonate resin (b), and the molten polycarbonate resin (c);
3) A method of mixing the polycarbonate resin (a), the polycarbonate resin (b), and the polycarbonate resin (c) in a solution state; and
4) A method of dry blending the polycarbonate resin (a), the polycarbonate resin (b), and the polycarbonate resin (c).

Each method will be explained below.

1) A method of melt-kneading the polycarbonate resin (a), the polycarbonate resin (b), and the polycarbonate resin (c)
Pellets or granules of the polycarbonate resin (a), pellets or granules of the polycarbonate resin (b), and pellets or granules of the polycarbonate resin (c) are melt-kneaded using a mixing device such as a kneader, a twin-screw extruder, a single-screw extruder, and the like. The pellets or powder of the polycarbonate resin (a), the pellets or powder of the polycarbonate resin (b), and the pellets or powder of the polycarbonate resin (c) may be mixed in advance in a solid state and then kneaded. Any one or two may be melted in the mixing device first, and the remaining polycarbonate resin may be added thereto and kneaded.

Although there is no particular restriction on the kneading temperature, it is preferably 240°C or higher, more preferably 260°C or higher, and even more preferably 280°C or higher. Further, the temperature is preferably 350°C or lower, and particularly preferably 320°C or lower.

When the kneading temperature is too low, the polycarbonate resin (a), the polycarbonate resin (b), and the polycarbonate resin (c) will not be completely mixed, which is not preferable because it may cause variations in hardness and impact resistance when molded products are produced. When the kneading temperature is too high, the color tone of the polycarbonate resin composition may deteriorate, which is not preferable.

2) A method of melt-kneading the molten polycarbonate resin (a), the molten polycarbonate resin (b), and the molten polycarbonate resin (c)

The molten polycarbonate resin (a), the molten polycarbonate resin (b), and the molten polycarbonate resin (c) are mixed in a mixing device such as a stirring tank, a static mixer, a kneader, a twin-screw extruder, a single-screw extruder, and the like. When the polycarbonate resin is obtained by a melt polymerization method, it may be introduced into the mixing device in a molten state without being cooled or solidified. The mixing temperature is not particularly limited, but is preferably 150°C or higher, more preferably 180°C or higher, and even more preferably 200°C or higher. Further, the temperature is preferably 300°C or lower, and particularly preferably 250°C or lower. When the mixing temperature is too low, the polycarbonate resin (a), the polycarbonate resin (b), and the polycarbonate resin (c) will not be completely mixed, which is not preferable because it may cause variations in hardness and impact resistance when molded products are produced. When the mixing temperature is too high, the color tone of the polycarbonate resin composition may deteriorate, which is not preferable.

3) A method of mixing the polycarbonate resin (a), the polycarbonate resin (b), and the polycarbonate resin (c) in a solution state

In this method, the polycarbonate resin (a), the polycarbonate resin (b), and the polycarbonate resin (c) are dissolved in a suitable solvent to form a solution, mixed in a solution state, and then isolated as a polycarbonate resin composition. Suitable solvents include, for example, aliphatic hydrocarbons such as hexane, n-heptane, and the like; chlorinated aliphatic carbons such as dichloromethane, chloroform, carbon tetrachloride, dichloroethane, trichloroethane, tetrachloroethane, dichloropropane, 1,2-dichloroethylene, and the like; aromatic hydrocarbons such as benzene, toluene, xylene, and the like; and substituted aromatic hydrocarbons such as nitrobenzene, acetophenone, and the like. Among these, chlorinated hydrocarbons such as dichloromethane or chlorobenzene are preferably used. These solvents can be used alone or in mixtures with other solvents.

Examples of the mixing device include a stirring tank and a static mixer.

The mixing temperature is not particularly limited as long as the polycarbonate resin (a), the polycarbonate resin (b), and the polycarbonate resin (c) are dissolved, but the mixing temperature is usually equal to below the boiling point of the solvent used.

4) A method of dry blending the polycarbonate resin (a), the polycarbonate resin (b), and the polycarbonate resin (c)

In this method, pellets or granules of the polycarbonate resin (a), pellets or granules of the polycarbonate resin (b), and pellets or granules of the polycarbonate resin (c) are dry-blended using a tumbler, a super mixer, Henschel mixer, Nauta mixer, and the like.

When producing the polycarbonate resin mixture by mixing two types of the polycarbonate resin (a), the polycarbonate resin (b), and the polycarbonate resin (c), the polycarbonate resin mixture can be obtained by using two of the polycarbonate resin (a), polycarbonate resin (b), and the polycarbonate resins (c) in the same manner as in 1) to 4) above. Also, when one or two of the polycarbonate resins are copolymerized polycarbonate resins containing two or three of the carbonate structural unit (X), the carbonate structural unit (Y), and the carbonate structural unit (Z), the polycarbonate resin mixture can be obtained by the same method.

Among the methods 1) to 4) above, the methods 1) and 2) in which the polycarbonate resin (a), the polycarbonate resin (b), and the polycarbonate resin (c) are melt-kneaded are preferred; and the method 4) in which the polycarbonate resin (a), the polycarbonate resin (b) and the polycarbonate resin (c) are dry-blended is also preferred.

In any of the above methods for producing the polycarbonate resin composition of the present invention, a pigment, a dye, a release agent, a heat stabilizer, and the like may be added as appropriate within the range that does not impair the purpose of the present invention.

[Method for producing molded product]

A known extrusion molding device or injection molding device is used to produce a resin molded product from the polycarbonate resin composition of the present invention.

The molding temperature when molding the polycarbonate resin composition of the present invention is preferably 200°C or higher, more preferably 250°C or higher, and most preferably 280°C or higher. Further, the temperature is preferably 350°C or lower, and particularly preferably 320°C or lower. When the molding temperature is too low, the

melt viscosity may increase, fluidity may decrease, and moldability may decrease. When the molding temperature is too high, the polycarbonate resin composition will be colored, and the color tone of the resulting molded product may also deteriorate, which is not preferable.

When performing injection molding or extrusion molding, a pigment, a dye, a release agent, a heat stabilizer, and the like can be appropriately added to the polycarbonate resin composition of the present invention within a range that does not impair the purpose of the present invention.

<Injection molded product>

A known injection molding device can be used to produce an injection molded product from the polycarbonate resin composition of the present invention.

The mold temperature when using an injection molding device or the like is preferably 150°C or lower, more preferably 120°C or lower, and most preferably 100°C or lower. Further, the temperature is preferably 30°C or higher, and particularly preferably 50°C or higher. When the mold temperature is too high, it is necessary to increase the cooling time during molding, which may lengthen the producing cycle of the molded product and reduce productivity. When the mold temperature is too low, the melt viscosity of the polycarbonate resin composition will become too high, and it may be impossible to obtain a uniform molded product, causing problems such as unevenness on the surface of the molded product, which is not preferable.

<Extrusion molded product>

A known extrusion molding device can be used to produce an extrusion molded product from the polycarbonate resin composition of the present invention. The extrusion molding device is generally equipped with a T die, a round die, and the like, and can produce extrusion molded products of various shapes. Examples of extruded product include a sheet, a film, a plate, a tube, a pipe, and the like. Among these, a sheet or a film is preferred.

The extrusion molded product of the polycarbonate resin composition of the present invention may be laminated with a hard coat layer on both sides or one side of the extrusion molded product to improve adhesion, paintability, and printability. The extrusion molded product may be heatlaminated with a weather resistance and/or a scratch resistance improving film to both sides or one side of the extruded product. Furthermore, the surface may be subjected to treatments such as graining, translucency, opacity and the like.

Molded articles of the polycarbonate resin composition of the present invention can be used in buildings, vehicles, electrical and electronic devices, machinery, and various other fields.

Example

The present invention is more specifically described in the following Examples. The present invention is not limited to these Examples.

The physical properties of polycarbonate resins produced in the following Examples and Comparative Examples were evaluated by the following methods.

(1) Viscosity-average molecular weight (Mv)

An intrinsic viscosity (limiting viscosity) [η] (unit: dL/g) of a polycarbonate resin dissolved in methylene chloride (concentration: 6.0 g/L) was measured with an Ubbelohde viscometer (manufactured by Moritomo Rika Kogyo) at 20°C, and the viscosity-average molecular weight (Mv) was calculated using the Schnell viscosity equation (the following equation).

$$\eta = 1.23 \times 10^{-4} Mv^{0.83}$$

(2) Glass transition temperature (Tg)

An amount of heat of approximately 10 mg of a polycarbonate resin sample was measured with a differential scanning calorimeter (DSC 6220 manufactured by SII) while heating the sample at a heating rate of 20°C/min, and an extrapolated glass transition starting temperature was determined in accordance with ISO 3146. The extrapolated glass transition starting temperature is the temperature at a point of intersection between an extended line of the baseline from the low temperature side to the high temperature side and a tangent line drawn at a point of the maximum gradient of a curve of a stepwise change portion of glass transition. The extrapolated glass transition temperature was defined

as the glass transition temperature (Tg) .

(3) Pencil hardness

A test piece of a polycarbonate resin sample having a thickness of 3.2 mm, a length of 53.5 mm, and a width of 12.7 mm was produced using a small injection molding machine (Shinko Sellbic Co., Ltd. C, Mobile) under the conditions of the cylinder temperature and the mold temperature described in each of Examples and Comparative Examples. The pencil hardness of the test piece was measured in accordance with ISO 15184 with a pencil hardness tester (manufactured by Toyo Seiki Seisaku-Sho, Ltd.) at a load of 750 g.

(4) Izod impact strength

A test piece of a polycarbonate resin sample having a thickness of 3.2 mm, a length of 53.5 mm, and a width of 12.7 mm was produced using a small injection molding machine (Shinko Sellbic Co., Ltd. C, Mobile) under the conditions of the cylinder temperature and the mold temperature described in each of Examples and Comparative Examples. A notch was cut on the test piece in accordance with ASTM D256 at a vertical position of 31.8 mm from the edge. The notch had a notch tip radius of 0.25 mm, and a notch depth of 2.54 mm. A value of the notched Izod of the test piece was measured five times using a universal impact tester (Toyo Seiki Seisaku-sho, Ltd.), and the average value was calculated.

(5) Total light transmittance

A test piece of a polycarbonate resin plate having a thickness of 3 mm, a length of 25mm, and a width of 25 mm was produced using a small injection molding machine (Shinko Sellbic Co., Ltd. C, Mobile) under the conditions of the cylinder temperature and the mold temperature described in each of Examples and Comparative Examples. A total light transmittance of the polycarbonate resin plate was measured three times using a spectral color/haze meter (Nippon Denshoku Industries Co., Ltd. COH7700) in accordance with ISO 13468-1, and the average value was calculated.

Hereinafter, the compounds used in Examples and Comparative Examples are abbreviated as follows. The compounds were from the following manufacturers.

<Aromatic dihydroxy compound (1)>

BPC: 2,2-bis(4-hydroxy-3-methylphenyl)propane (manufactured by Honshu Chemical Co., Ltd.)
Bis-OCZ: 1,1-bis(3-methyl-4-hydroxyphenyl)cyclohexane (manufactured by Honshu Chemical Co., Ltd.)
BCF: 9,9-bis(4-hydroxy-3-methylphenyl)fluorene (manufactured by Osaka Gas Chemical Co., Ltd.)

<Aromatic dihydroxy compound (2)>

4,4'-BP: 4,4'-dihydroxy-diphenyl (manufactured by MELOG SPECIALITY CHEMICALS LTD.)

<Aromatic dihydroxy compound (3)>

BPA: 2,2-bis(4-hydroxyphenyl)propane (manufactured by Mitsubishi Chemical Corporation)
BP-TMC: 1,1-bis(4-hydroxyphenyl)-3,3,5-trimethylcyclohexane (manufactured by Honshu Chemical Co., Ltd.)
DHDE: 4,4'-dihydroxydiphenyl ether (manufactured by Tokyo Chemical Industry Co., Ltd.)

<Carbonate ester>

DPC: diphenyl carbonate (manufactured by Mitsubishi Chemical Corporation)

[Example 1]

A raw material mixture was prepared by charging a 150-ml glass reactor equipped with a reactor stirrer, a reactor heater, and a reactor pressure regulator with 66.34 g (approximately 0.259 mol) of BPC, 38.55 g (approximately

0.207 mol) of 4,4'-BP, 11.82 g (approximately 0.0518 mol) of BPA, 118.64 g (approximately 0.554 mol) of DPC, and a 0.4% by mass aqueous solution of cesium carbonate as a catalyst so that the amount of cesium carbonate was 1 umol per 1 mole of the total dihydroxy compounds.

The glass reactor was then evacuated to a pressure of approximately 50 Pa (0.38 Torr) and was then filled with nitrogen to atmospheric pressure. This operation was performed three times to purge the reactor with nitrogen. After the nitrogen purge, the external temperature of the reactor was increased to 220°C to gradually increase the internal temperature of the reactor and dissolve the mixture. The stirrer was then rotated at 100 rpm. The absolute pressure in the reactor was then reduced from 101.3 kPa (760 Torr) to 13.3 kPa (100 Torr) over 40 minutes while distilling off a by-product phenol of an oligomerization reaction between the dihydroxy compounds and DPC in the reactor.

A transesterification reaction was then performed for 80 minutes while maintaining the pressure in the reactor at 13.3 kPa and further distilling off the phenol. The external temperature of the reactor was then increased to 285°C, and the absolute pressure in the reactor was reduced from 13.3 kPa (100 Torr) to 399 Pa (3 Torr) over 40 minutes to remove the distilled phenol from the system. Furthermore, the absolute pressure in the reactor was reduced to 30 Pa (approximately 0.2 Torr) to perform a polycondensation reaction. The polycondensation reaction was completed when the reactor stirrer had a predetermined stirring power.

The reactor was then filled with nitrogen to an absolute pressure of 101.3 kPa and was pressured to a gauge pressure of 0.2 MPa. A strand of the polycarbonate resin was drawn out from the bottom of the reactor and was pelletized with a rotary cutter.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 300°C and a mold temperature of 90°C. A pencil hardness and a notched Izod impact strength of this sample were measured. The results are shown in Table 1.

[Example 2]

The method described in Example 1 was performed in the same manner except that 53.24g (approximately 0.208mol) of BPC, 33.84g (approximately 0.182mol) of 4,4'-BP, 29.63g (approximately 0.130mol) of BPA, 119.23g (approximately 0.557mol) of DPC, and a 0.4% by mass aqueous solution of cesium carbonate as a catalyst were added so that the amount of cesium carbonate was 1 umol per 1 mol of the total dihydroxy compounds to prepare a raw material mixture, and after raising the temperature from 220°C, the external temperature of the reactor was changed from 285°C to 275°C.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 300°C and a mold temperature of 90°C. A pencil hardness and a notched Izod impact strength of this sample were measured. The results are shown in Table 1.

In addition, a plate having a thickness of 3 mm, length of 25 mm, and width of 25 mm was molded under conditions of a cylinder temperature of 300°C and a mold temperature of 90°C and the total light transmittance was measured. The result is shown in Table 4.

[Example 3]

The method described in Example 1 was performed in the same manner except that 52.75g (approximately 0.206mol) of BPC, 28.74g (approximately 0.154mol) of 4,4'-BP, 35.23g (approximately 0.154mol) of BPA, 112.95g (approximately 0.527mol) of DPC, and a 0.4% by mass aqueous solution of cesium carbonate as a catalyst were added so that the amount of cesium carbonate was 1 μmol per 1 mol of the total dihydroxy compounds to prepare a raw material mixture.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 320°C and a mold temperature of 90°C. A pencil hardness and a notched Izod impact strength of this sample were measured. The results are shown in Table 1.

[Example 4]

The method described in Example 1 was performed in the same manner except that 47.78g (approximately 0.186mol) of BPC, 44.62g (approximately 0.240mol) of 4,4'-BP, 24.31g (approximately 0.107mol) of BPA, 122.06g

(approximately 0.570mol) of DPC, and a 0.4% by mass aqueous solution of cesium carbonate as a catalyst were added so that the amount of cesium carbonate was 0.7 μmol per 1 mol of the total dihydroxy compounds to prepare a raw material mixture, and after raising the temperature from 220°C, the external temperature of the reactor was changed from 285°C to 300°C.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 300°C and a mold temperature of 90°C. A pencil hardness and a notched Izod impact strength of this sample were measured. The results are shown in Table 1.

[Example 5]

The method described in Example 1 was performed in the same manner except that 40.82g (approximately 0.159mol) of BPC, 39.54g (approximately 0.212mol) of 4,4'-BP, 36.35g (approximately 0.159mol) of BPA, 123.94g (approximately 0.579mol) of DPC, and a 0.4% by mass aqueous solution of cesium carbonate as a catalyst were added so that the amount of cesium carbonate was 0.7 μmol per 1 mol of the total dihydroxy compounds to prepare a raw material mixture, and after raising the temperature from 220°C, the external temperature of the reactor was changed from 285°C to 290°C.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 310°C and a mold temperature of 90°C. A pencil hardness and a notched Izod impact strength of this sample were measured. The results are shown in Table 1.

In addition, a plate having a thickness of 3 mm, length of 25 mm, and width of 25 mm was molded under conditions of a cylinder temperature of 300°C and a mold temperature of 90°C and the total light transmittance was measured. The result is shown in Table 4.

[Example 6]

The method described in Example 1 was performed in the same manner except that 39.68g (approximately 0.155mol) of BPC, 24.02g (approximately 0.129mol) of 4,4'-BP, 53.01g (approximately 0.232mol) of BPA, 118.27g (approximately 0.552mol) of DPC, and a 0.4% by mass aqueous solution of cesium carbonate as a catalyst were added so that the amount of cesium carbonate was 1 umol per 1 mol of the total dihydroxy compounds to prepare a raw material mixture, and after raising the temperature from 220°C, the external temperature of the reactor was changed from 285°C to 275°C.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 300°C and a mold temperature of 90°C. A pencil hardness and a notched Izod impact strength of this sample were measured. The results are shown in Table 1.

[Example 7]

The method described in Example 1 was performed in the same manner except that 44.75g (approximately 0.151mol) of Bis-OCZ, 37.49g (approximately 0.201mol) of 4,4'-BP, 34.47g (approximately 0.151mol) of BPA, and 116.44g (approximately 0.544 mol) of DPC and a 0.4% by mass aqueous solution of cesium carbonate as a catalyst were added so that the amount of cesium carbonate was 1 μmol per 1 mol of the total dihydroxy compounds to prepare a raw material mixture, and after raising the temperature from 220°C, the external temperature of the reactor was changed from 285°C to 290°C.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 300°C and a mold temperature of 90°C. A pencil hardness and a notched Izod impact strength of this sample were measured. The results are shown in Table 1.

[Example 8]

The method described in Example 1 was performed in the same manner except that 43.30g (approximately

0.170mol) of BPC, 35.95g (approximately 0.193mol) of 4,4'-BP, 37.46g (approximately 0.121mol) of BP-TMC, and 110.63g (approximately 0.516 mol) of DPC, and a 0.4% by mass aqueous solution of cesium carbonate as a catalyst were added so that the amount of cesium carbonate was 1 umol per 1 mol of the total dihydroxy compounds to prepare a raw material mixture, and after raising the temperature from 220°C, the external temperature of the reactor was changed from 285°C to 290°C.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 320°C and a mold temperature of 90°C. A pencil hardness and a notched Izod impact strength of this sample were measured. The results are shown in Table 1.

[Example 9]

The method described in Example 1 was performed in the same manner except that 54.83g (approximately 0.214mol) of BPC, 34.85g (approximately 0.187mol) of 4,4'-BP, 27.03g (approximately 0.134mol) of DHDE, 122.56g (approximately 0.572mol) of DPC, and a 0.4% by mass aqueous solution of cesium carbonate as a catalyst were added so that the amount of cesium carbonate was 1 umol per 1 mol of the total dihydroxy compounds to prepare a raw material mixture.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 310°C and a mold temperature of 90°C. A pencil hardness and a notched Izod impact strength of this sample were measured. The results are shown in Table 1.

[Example 10, 11]

A polycarbonate resin (viscosity-average molecular weight 23,700) was newly produced according to the method of Example 2, and was used as the polycarbonate resin (PC1). Further, a polycarbonate resin (viscosity-average molecular weight 21,000) was newly produced according to the method of Comparative Example 6 described below, and was used as the polycarbonate resin (PC2).

PC1 and PC2 were melt-kneaded using a small twin-screw kneading extruder (Technovel Co., Ltd. KZW15TW) at the weight ratio shown in Table 2, extruded from the outlet of the twin-screw extruder into a strand shape. The strand was cooled and solidified with water and pelletized using a rotary cutter to obtain a polycarbonate resin composition. The barrel temperature of the twin-screw extruder was 280°C, and the polycarbonate resin temperature at the outlet of the twin-screw extruder was 275°C. During melt-kneading, the vent port of the twin-screw extruder was connected to a vacuum pump, and the pressure at the vent port was controlled to be 20 kPa.

The glass transition temperature of the obtained polycarbonate resin composition was measured.

In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 300°C and a mold temperature of 90°C. A pencil hardness and a notched Izod impact strength of this sample were measured. The results are shown in Table 2.

[Comparative Example 1]

The method described in Example 1 was performed in the same manner except that 54.78g (approximately 0.214mol) of BPC, 49.74g (approximately 0.267mol) of 4,4'-BP, 12.20g (approximately 0.0534mol) of BPA, 122.45g (approximately 0.572mol) of DPC, and a 0.4% by mass aqueous solution of cesium carbonate as a catalyst were added so that the amount of cesium carbonate was 1 umol per 1 mol of the total dihydroxy compounds to prepare a raw material mixture. However, crystallization occurred during polymerization, and extraction was not possible.

[Comparative Example 2]

The method described in Example 1 was performed in the same manner except that 63.95g (approximately 0.250mol) of BPC, 18.58g (approximately 0.0998mol) of 4,4'-BP, 34.17g (approximately 0.150mol) of BPA, 114.37g (approximately 0.534mol) of DPC, and a 0.4% by mass aqueous solution of cesium carbonate as a catalyst were added so that the amount of cesium carbonate was 1 umol per 1 mol of the total dihydroxy compounds to prepare a raw material mixture, and after raising the temperature from 220°C, the external temperature of the reactor was changed from 285°C to 275°C.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 300°C and a mold temperature of 90°C. A pencil hardness and a notched Izod impact strength of this sample were measured. The results are shown in Table 3.

[Comparative Example 3]

The method described in Example 1 was performed in the same manner except that 49.97 g (approximately 0.195 mol) of BPC, 66.74 g (approximately 0.292 mol) of BPA, 109.60 g (approximately 0.512 mol) of DPC, and a 0.4% by mass aqueous solution of cesium carbonate as a catalyst were added so that the amount of cesium carbonate was 1 umol per 1 mol of the total dihydroxy compounds to prepare a raw material mixture.
The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 290°C and a mold temperature of 90°C. A pencil hardness and a notched Izod impact strength of this sample were measured. The results are shown in Table 3.

[Comparative Example 4]

The method described in Example 1 was performed in the same manner except that 77.91g (approximately 0.304mol) of BPC, 33.01g (approximately 0.177mol) of 4,4'-BP, 5.78g (approximately 0.0253mol) of BPA, 116.11g (approximately 0.542mol) of DPC, and a 0.4% by mass aqueous solution of cesium carbonate as a catalyst were added so that the amount of cesium carbonate was 1 umol per 1 mol of the total dihydroxy compounds to prepare a raw material mixture.
The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 300°C and a mold temperature of 90°C. A pencil hardness and a notched Izod impact strength of this sample were measured. The results are shown in Table 3.

[Comparative Example 5]

The method described in Example 1 was performed in the same manner except that 13.07g (approximately 0.0510mol) of BPC, 4.75g (approximately 0.0255mol) of 4,4'-BP, 98.90g (approximately 0.433mol) of BPA, 116.82g (approximately 0.545mol) of DPC, and a 0.4% by mass aqueous solution of cesium carbonate as a catalyst were added so that the amount of cesium carbonate was 0.5 $\mu$mol per 1 mol of the total dihydroxy compounds to prepare a raw material mixture, and after raising the temperature from 220°C, the external temperature of the reactor was changed from 285°C to 290°C.
The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 300°C and a mold temperature of 90°C. A pencil hardness and a notched Izod impact strength of this sample were measured. The results are shown in Table 3.

[Comparative Example 6]

The method described in Example 1 was performed in the same manner except that 47.02g (approximately 0.183mol) of BPC, 17.35g (approximately 0.0459mol) of BCF, 52.34g (approximately 0.229mol) of BPA, 101.66g (approximately 0.475mol) of DPC, and a 0.4% by mass aqueous solution of cesium carbonate as a catalyst were added so that the amount of cesium carbonate was 5.0 $\mu$mol per 1 mol of the total dihydroxy compounds to prepare a raw material mixture; thereafter, at an external temperature of the reactor of 220° C, the absolute pressure was reduced from 101.3 kPa (760 Torr) to 13.3 kPa (100 Torr); then, transesterification reaction was carried out for 80 minutes; thereafter, the external temperature of the reactor was raised to 250°C, and at 250°C, the pressure inside the reactor was reduced from absolute pressure 13.3 kPa (100 Torr) to 399 Pa (3 Torr), and the external temperature of the reactor was raised to 290°C.
The viscosity-average molecular weight and glass transition temperature of the thus produced polycarbonate resin were measured. In addition, a sample having a thickness of 3.2 mm, a length of 53.5 mm, and a width of 12.7 mm

was produced using a small injection molding machine (Shinko Sellbic Co., Ltd., C, Mobile) under the conditions of a cylinder temperature of 300°C and a mold temperature of 90°C. A pencil hardness and a notched Izod impact strength of this sample were measured. The results are shown in Table 3.

[Comparative Example 7]

The method described in Example 1 was performed in the same manner except that 96.94g (approximately 0.425mol) of BPA, 19.77g (approximately 0.106mol) of 4,4'-BP, 121.67g (approximately 0.568mol) of DPC, and a 0.4% by mass aqueous solution of cesium carbonate as a catalyst were added so that the amount of cesium carbonate was 0.5 μmol per 1 mol of the total dihydroxy compounds to prepare a raw material mixture, and after raising the temperature from 220°C, the external temperature of the reactor was changed from 285°C to 290°C.

The viscosity-average molecular weight and glass transition temperature of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 345°C and a mold temperature of 100°C. A pencil hardness and a notched Izod impact strength of this sample were measured. The results are shown in Table 3.

[Comparative Example 8]

The method described in Example 1 was performed in the same manner except that 116.71 g (approximately 0.511 mol) of BPA, 117.18 g (approximately 0.547 mol) of DPC, and a 0.4% by mass aqueous solution of cesium carbonate as a catalyst were added so that the amount of cesium carbonate was 0.5 umol per 1 mol of the total dihydroxy compounds to prepare a raw material mixture, and after raising the temperature from 220°C, the external temperature of the reactor was changed from 285°C to 290°C.

The viscosity-average molecular weight of the thus produced polycarbonate resin was measured and found to be 21,000. In addition, a plate having a thickness of 3 mm, length of 25 mm, and width of 25 mm was molded under conditions of a cylinder temperature of 280°C and a mold temperature of 90°C and the total light transmittance was measured. The result is shown in Table 4.

[Table 1]

| | | Example | | | | | | | | |
|---|---|---|---|---|---|---|---|---|---|---|
| | | 1 | 2 | 3 | 4 | 5 | 6 | 7 | 8 | 9 |
| Dihydroxy Compound [mol%] | BPC | 50 | 40 | 40 | 35 | 30 | 30 | 0 | 35 | 40 |
| | Bis-OCZ | 0 | 0 | 0 | 0 | 0 | 0 | 30 | 0 | 0 |
| | BCF | 0 | 0 | 0 | 0 | 0 | 0 | 0 | 0 | 0 |
| | 4,4'-BP | 40 | 35 | 30 | 45 | 40 | 25 | 40 | 40 | 35 |
| | BPA | 10 | 25 | 30 | 20 | 30 | 45 | 30 | 0 | 0 |
| | BP-TMC | 0 | 0 | 0 | 0 | 0 | 0 | 0 | 25 | 0 |
| | DHDE | 0 | 0 | 0 | 0 | 0 | 0 | 0 | 0 | 25 |
| Carbonate Structural Unit (Y)/Carbonate Structural Unit (X) Molar Ratio | | 0.80 | 0.88 | 0.75 | 1.29 | 1.33 | 0.83 | 1.33 | 1.14 | 0.88 |
| Viscosity-Average Molecular Weight (Mv) | | 27710 | 25040 | 24700 | 25000 | 23500 | 24200 | 20000 | 23300 | 28050 |
| Tg[°C] | | 134 | 139 | 138 | 137 | 138 | 139 | 142 | 165 | 129 |
| Pencil Hardness | | H | H | H | F | F | F | F | H | F |
| Notched Izod[J/m] | | 100 | 110 | 100 | 132 | 267 | 106 | 81 | 97 | 137 |

[Table 2]

| | | Example | |
|---|---|---|---|
| | | 10 | 11 |
| Polycarbonate Resin Blend Weight Ratio[wt%] | PC1 | 80 | 60 |
| | PC2 | 20 | 40 |
| Blend Molar Ratio in terms of Structural Units[mol%] | PC1 | 80 | 60 |
| | PC2 | 20 | 40 |
| Content of Polycarbonate Structural Units [mol%] | BPC | 32 | 24 |
| | 4,4'-BP | 28 | 21 |
| | BPA | 40 | 55 |
| (Y)/(X)Molar Ratio | | 0.88 | 0.88 |
| Tg[°C] | | 137 | 139 |
| Pencil Hardness | | F | HB |
| Notched Izod Impact Strength[J/m] | | 112 | 114 |

[Table 3]

| | | Comparative Example | | | | | | |
|---|---|---|---|---|---|---|---|---|
| | | 1 | 2 | 3 | 4 | 5 | 6 | 7 |
| Dihydroxy Compound [mol%] | BPC | 40 | 50 | 40 | 60 | 10 | 40 | 0 |
| | Bis-OCZ | 0 | 0 | 0 | 0 | 0 | 0 | 0 |
| | BCF | 0 | 0 | 0 | 0 | 0 | 10 | 0 |
| | 4,4'-BP | 50 | 20 | 0 | 35 | 5 | 0 | 20 |
| | BPA | 10 | 30 | 60 | 5 | 85 | 50 | 80 |
| | BP-TMC | 0 | 0 | 0 | 0 | 0 | 0 | 0 |
| | DHDE | 0 | 0 | 0 | 0 | 0 | 0 | 0 |
| Carbonate Structural Unit (Y)/ Carbonate Structural Unit (X) Molar Ratio | | 1.25 | 0.40 | 0 | 0.58 | 0.50 | 0 | - |
| Viscosity-Average Molecular Weight (Mv) | | Crystallization | 24300 | 26450 | 23700 | 20800 | 20000 | 23100 |
| Tg[°C] | | | 133 | 134 | 130 | 141 | 145 | 150 |
| Pencil Hardness | | | H | F | H | B | H | 2B |
| Notched Izod[J/m] | | | 68 | 60 | 71 | 101 | 41 | 644 |

[Table 4]

| | | Example | | Comparative Example |
|---|---|---|---|---|
| | | 2 | 5 | 8 |
| Aromatic Dihydroxy Compound [mol%] | BPC | 40 | 30 | 0 |
| | 4,4'-BP | 35 | 40 | 0 |
| | BPA | 25 | 30 | 100 |

(continued)

| | Example | | Comparative Example |
|---|---|---|---|
| | 2 | 5 | 8 |
| Total Light Transmittance[%] | 87.60 | 87.43 | 89.68 |

[Consideration]

From the above results, the following can be understood.

In Comparative Example 1, the content of 4,4'-BP (the carbonate structural unit (Y)) was 50 mol%, which exceeded 49 mol%. For this reason, it is thought that crystallization occurred during polymerization and extraction became impossible.

In Examples 1 to 11, the molar ratio of the carbonate structural unit (Y)/the carbonate structural unit (X) was all 0.65 or more. Therefore, it can be seen that the surface hardness is high and the notched Izod impact strength is high.

On the other hand, in Comparative Examples 2 to 6, the molar ratio of the carbonate structural unit (Y)/the carbonate structural unit (X) is all less than 0.65. Therefore, the notched Izod impact strength is low at less than 80 J/m, or the pencil hardness is low at B. In other words, these can not to achieve both surface hardness and impact resistance.

In particular, in Comparative Example 4, the content of 4,4'-BP (the carbonate structural unit (Y)) is as high as 35 mol%, but the molar ratio of the carbonate structural unit (Y)/the carbonate structural unit (X) is less than 0.65. For this reason, it is considered that the notched Izod impact strength is low. Further, in Comparative Example 5, the content of BPA (the carbonate structural unit (Z)) is as high as 85 mol%. For this reason, the notched Izod impact strength was a high value. However, since the molar ratio of the carbonate structural unit (Y)/the carbonate structural unit (X) is less than 0.65, the pencil hardness is as low as B. In other words, it can not achieve both surface hardness and impact resistance.

Furthermore, since Comparative Example 7 does not contain BPC (the carbonate structural unit (X)), the pencil hardness is as low as 2B, and it can be said that it is not possible to achieve both surface hardness and impact resistance.

Further, from Table 4, although both Examples 2 and 5 are slightly inferior to Comparative Example 8, they exhibit high total light transmittance, indicating high transparency.

From the above, it can be seen that the polycarbonate resins of Examples 1 to 11, which are the polycarbonate resin compositions of the present invention, have excellent surface hardness and impact resistance, and also have high heat resistance and transparency.

Although the present invention has been described in detail with reference to particular embodiments, it will be apparent to those skilled in the art that various modifications may be made therein without departing from the spirit and scope of the present invention.

The present application is based on Japanese Patent Application No. 2021-176673 filed October 28, 2021,which is incorporated herein by reference in their entirety.

## Claims

1. A polycarbonate resin composition comprising a carbonate structural unit (X) derived from an aromatic dihydroxy compound represented by the following formula (1), a carbonate structural unit (Y) derived from an aromatic dihydroxy compound represented by the following formula (2), and a carbonate structural unit (Z) derived from an aromatic dihydroxy compound represented by the following formula (3),

   wherein a molar ratio of the content of the carbonate structural unit (Y) to the carbonate structural unit (X) is 0.65 or more, and
   the content of the carbonate structural unit (Y) in 100 mol% of all carbonate structural units of the polycarbonate resin composition is 49 mol% or less.

[Chem. 1]

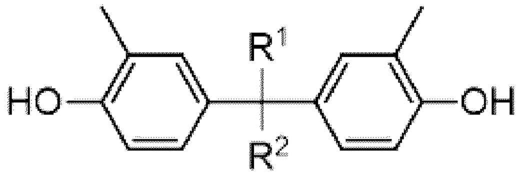

(1)

(In the formula (1), $R^1$ and $R^2$ each independently represent a hydrogen atom, a substituted or unsubstituted alkyl group having 1 to 20 carbon atoms, or a substituted or unsubstituted aryl group. $R^1$ and $R^2$ may be bonded to each other to form a ring.)

[Chem. 2]

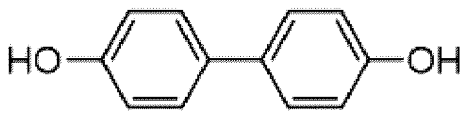

(2)

[Chem. 3]

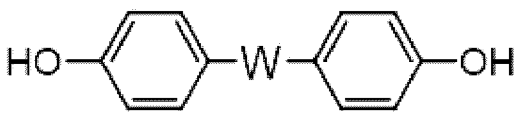

(3)

(In the formula (3), W represents -O-, -S-, $-SO_2-$, or $-CR^3R^4-$ (Wherein $R^3$ and $R^4$ each independently represent a hydrogen atom, a substituted or unsubstituted alkyl group having 1 to 20 carbon atoms, or a substituted or unsubstituted aryl group. $R^3$ and $R^4$ may be bonded to each other to form a ring.) .)

**2.** The polycarbonate resin composition according to claim 1, wherein the content of the carbonate structural unit (Z) in 100 mol% of all carbonate structural units is 5 mol% or more and 70 mol% or less.

**3.** The polycarbonate resin composition according to claim 1, wherein the content of the carbonate structural unit (X) in 100 mol% of all carbonate structural units is 15 mol% or more and 60 mol% or less.

**4.** The polycarbonate resin composition according to claim 1, wherein the content of the carbonate structural unit (Y) in 100 mol% of all carbonate structural units is 15 mol% or more and 49 mol% or less.

**5.** The polycarbonate resin composition according to claim 1, comprising the carbonate structural unit (X), the carbonate structural unit (Y), and the carbonate structural unit (Z) as a copolymerized polycarbonate resin.

**6.** The polycarbonate resin composition according to claim 1, wherein the polycarbonate resin composition is a blend of a polycarbonate resin containing the carbonate structural unit (X), a polycarbonate resin containing the carbonate structural unit (Y), and a polycarbonate resin containing the carbonate structural unit (Z).

**7.** The polycarbonate resin composition according to any one of claims 1 to 6, wherein a viscosity-average molecular weight (Mv) is in the range of 13,000 to 33,000.

**8.** The polycarbonate resin composition according to any one of claims 1 to 6, having a pencil hardness of HB or higher as measured by a method based on ISO 15184.

**9.** The polycarbonate resin composition according to any one of claims 1 to 6, having a notched Izod value of 80 J/m or more as measured by a method based on ASTM D256.

**10.** The polycarbonate resin composition according to any one of claims 1 to 6, wherein the carbonate structural unit (X) is a carbonate structural unit derived from an aromatic dihydroxy compound represented by the following formula (4) and/or an aromatic dihydroxy compound represented by the following formula (5).

[Chem. 4]

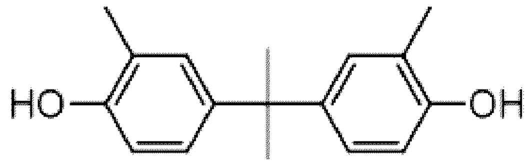

(4)

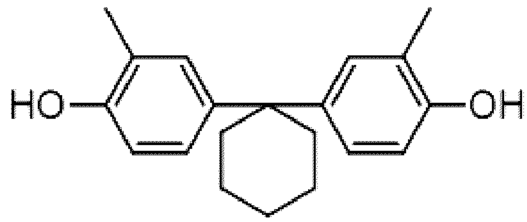

(5)

**11.** The polycarbonate resin composition according to any one of claims 1 to 6, wherein the carbonate structural unit (Z) is a carbonate structural unit derived from any one or more of an aromatic dihydroxy compound represented by the following formula (6), an aromatic dihydroxy compound represented by the following formula (7), and an aromatic dihydroxy compound represented by the following formula (8).

[Chem. 5]

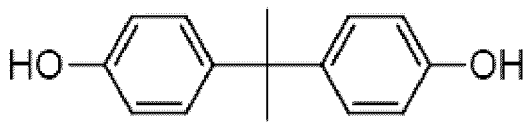

(6)

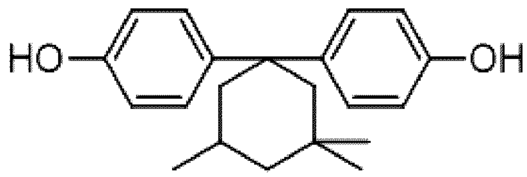

(7)

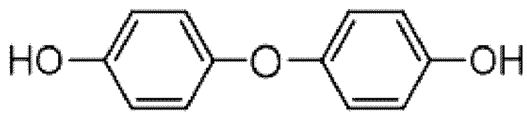

(8)

**12.** An injection molded product obtained by injection molding the polycarbonate resin composition according to any one of claims 1 to 6.

**13.** An extrusion molded product obtained by extrusion molding the polycarbonate resin composition according to any one of claims 1 to 6.

**14.** The extrusion molded product according to claim 13, wherein the extrusion molded product is a sheet or a film.

## INTERNATIONAL SEARCH REPORT

International application No.
**PCT/JP2022/039925**

**A. CLASSIFICATION OF SUBJECT MATTER**

***C08G 64/06***(2006.01)i; ***C08L 69/00***(2006.01)i
FI: C08G64/06; C08L69/00

According to International Patent Classification (IPC) or to both national classification and IPC

**B. FIELDS SEARCHED**

Minimum documentation searched (classification system followed by classification symbols)

C08G64/00-64/42, C08L1/00-101/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 6-248066 A (IDEMITSU KOSAN CO., LTD.) 06 September 1994 (1994-09-06)<br>claims, examples | 1-11<br>12-14 |
| Y | KR 10-2015-0078280 A (CHEIL INDUSTRIES INC.) 08 July 2015 (2015-07-08)<br>claims, paragraphs [0063], [0070], [0071], examples | 1-14 |
| Y | US 2015/0299388 A1 (CHEIL INDUSTRIES INC.) 22 October 2015 (2015-10-22)<br>claims, paragraph [0045], examples and comparative examples | 1-14 |
| A | JP 2004-133230 A (KYOCERA MITA CORP.) 30 April 2004 (2004-04-30)<br>entire text | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/039925**

| Patent document cited in search report | Publication date (day/month/year) | Patent family member(s) | Publication date (day/month/year) |
|---|---|---|---|
| JP 6-248066 A | 06 September 1994 | (Family: none) | |
| KR 10-2015-0078280 A | 08 July 2015 | WO 2015/102173 A1 | |
| US 2015/0299388 A1 | 22 October 2015 | WO 2014/092243 A1<br>KR 10-2014-0075520 A<br>CN 104854164 A | |
| JP 2004-133230 A | 30 April 2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20140186602 A
- WO 2014104484 A
- JP 2021176673 A